# EUROPÄISCHE PATENTSCHRIFT

(11) **EP 1 051 786 B1**
(45) Veröffentlichungstag und Bekanntmachung des Hinweises auf die Patenterteilung: **02.05.2003**
(21) Anmeldenummer: 99901499.6
(22) Anmeldetag: 28.01.1999
(51) Int. Cl.: H02H 3/33

(54) **SCHUTZSCHALTUNGSANORDNUNG**
PROTECTIVE CIRCUIT BREAKING CIRCUITRY
CONFIGURATION DE CIRCUIT DE PROTECTION

(30) Priorität: 28.01.1998 AT 13698
(43) Veröffentlichungstag der Anmeldung: 15.11.2000
(73) Patentinhaber: Felten & Guilleaume Austria AG, 3943 Schrems (AT)
(72) Erfinder: MAYER, Peter, A-1190 Wien (AT)
(74) Vertreter: Gibler, Ferdinand, Dipl.-Ing. Dr. techn.
(86) Internationale Anmeldenummer: AT9900022
(87) Internationale Veröffentlichungsnummer: WO99039417

(56) Entgegenhaltungen:
- FR-A- 2 625 026
- FR-A- 2 643 195

## Beschreibung

Die Erfindung betrifft einerseits eine Einrichtung zur Analyse von in einer elektrischen Anlage auftretenden Erdfehlerströmen mit einer Stromerfassungsbaugruppe und einer Stromanalysebaugruppe, welche Einrichtung bei Auftreten von Erdfehlerströmen ein elektrisches Signal erzeugt, welches die Öffnung der Unterbrechungskontakte bzw. das Sperren der Halbleiter-Schaltbauteile eines der Anlage vorgeschalteten Schaltgerätes bewirkt, wobei die Einrichtung in einem vom Schaltgerät separaten Gehäuse angeordnet ist und andererseits ein Schaltgerät umfassend Unterbrechungskontakte, wie zum Beispiel FI-Schutzschalter, Leitungsschutzschalter, Schütz, Leistungsschalter bzw. umfassend Halbleiter-Schaltbauteile.

Fehlerströme können im wesentlichen dieselben Kurvenformen wie die von den Verbrauchern einer elektrischen Anlage aufgenommenen Lastströme aufweisen. So kommen neben reinen Wechselströmen auch pulsierende Gleichströme, die innerhalb jeder Periode der Netzfrequenz mindestens eine Halbperiode lang Null oder nahezu Null werden und glatte Fehlergleichströme oder solche mit geringer Restwelligkeit in Frage. Letztere beiden Typen entstehen bei Verbrauchern, die Gleichrichter-Schaltungen enthalten.

Es sind bereits pulsstromsensitve FI-Schutzeinrichtungen bekannt, die Fehlerwechselströme und pulsierende Fehlergleichströme mit einem einzigen Summenstromwandler gleichzeitig erfassen können, die jedoch ungeeignet für glatte Fehlergleichströme sind.

Um diese Fehlergleichströme dennoch zu erfassen, wurde vorgeschlagen, eine pulsstromsensitive FI-Schutzeinrichtung um einen zweiten, ausschließlich auf Fehlergleichströme ansprechenden Summenstromwandler zu erweitern. Die Sekundärkreise beider Summenstromwandler wirken dabei über ein gemeinsames Schaltschloß auf einen gemeinsamen Kontaktapparat ein. Sämtliche erwähnte Baugruppen des durch die Ergänzung entstandenen allstromsensitiven Schalters sind in einem gemeinsamen Gehäuse untergebracht.

Beim Herstellen einer Anlage wird in der Regel -sofern dies die Eigenschaften der Verbraucher zulassen- die einfache, weil kostengünstigere Version des pulsstromsensitiven FI-Schutzschalters eingesetzt werden. Wird durch spätere Erweiterung der Anlage die Verwendung eines allstromsensitiven FI-Schutzschalters notwendig, muß der an sich noch voll funktionsfähige puls- gegen den allstromsensitiven FI-Schutzschalter ersetzt werden.

Wünschenswert wäre, daß der ohnehin in jeder Anlage notwendige wechselstrom- bzw. pulsstromsensitive Fehlerstromerfassungsteil sowie der Kontaktapparat des FI-Schutzschalters separat von Baugruppen zur Erfassung von weiteren Fehlerstrom-Typen gehalten ist.

Auch eine solche Gestaltungsweise ist dem bekannten Stand der Technik bereits entnehmbar. Hier ist einerseits ein vollständiger, d.h. mit Summenstromwandler, Schaltschloß und Kontaktapparat ausgestatteter FI-Schutzschalter und andererseits eine Zusatzbaugruppe, die lediglich einen Summenstromwandler umfaßt, vorgesehen. FI-Schutzschalter und Zusatzbaugruppe weisen voneinander getrennte Gehäuse auf, wodurch jedes Element unabhängig vom anderen ausgetauscht werden kann.

Die Betätigung des Schaltschlosses erfolgt elektxomagnetisch, d.h. durch Beaufschlagung einer Spule mit beweglichem Anker mit einem entsprechenden elektrischen Signal. Damit sowohl FI-Schutzschalter als auch Zusatzbaugruppe gleichermaßen auf das Schaltschloß einwirken können, ist besagte Spule aus zwei elektrisch gegeneinander isolierten Wicklungen zusammengesetzt, wovon die erste in den Sekundärkreis des FI-Summenstromwandlers und die zweite in den Sekundärkreis des Zusatz-Summenstromwandlers geschaltet ist.

Zur Übertragung des von der Zusatzbaugruppe erzeugten elektrischen Signales zum FI-Schutzschalter sind Leitungen notwendig, die die Sekundärwicklung des Zusatz-Summenstromwandlers und die zweite Wicklung der Schaltschloß-Betätigungsspule miteinander verbinden. Diese Leitungen müssen bei Erstellung der Anlage sowie bei jedem Austausch einer der beiden Komponenten ab- bzw. angeschlossen werden, wodurch sich der Verdrahtungsaufwand sowohl hinsichtlich des Materials wie auch hinsichtlich der Arbeitszeit erhöht.

In der **FR-A-2 643 195** wird ein FI-Schalter beschrieben, der zunächst die herkömmlichen Bauteile Unterbrechungskontakte, Summenstromwandler mit Sekundärwicklung und elektromagnetischer Auslöser, der mit der Sekundärwicklung elektrisch verbunden ist und mechanisch auf die Unterbrechungskontakte einwirken kann, aufweist.

Grundsätzliche Idee der **FR-A1-2 643 195** ist es, ein mit einem Sensor verbundenes elektronisches Modul mit diesem FI-Schalter zu verbinden, welches Modul die Auslösung des FI-Schalters hervorrufen kann. Diese Auslösung soll dann erfolgen, wenn die vom Sensor erfaßte, physikalische Größe einen vorgebbaren Wert, bei welchem Gefahr für die elektrische Anlage droht, erreicht Hinsichtlich der Art und Weise, wie das Modul auf den FI-Schalter einwirkt, werden mehrere Möglichkeiten angeführt:

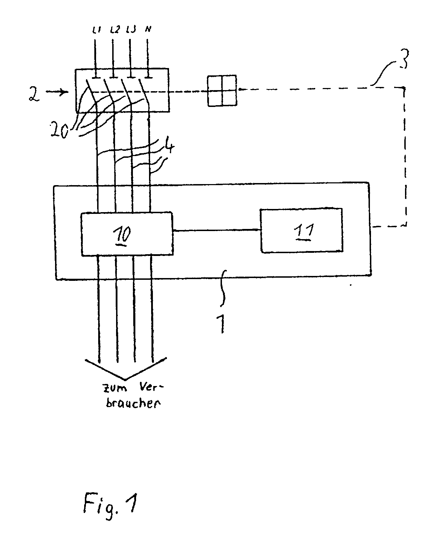

Gemäß Fig.1 ist das Modul zunächst an die Anschlußklemmen des FI-Schalters angeschlossen, welche parallel zum Prüfwiderstand bzw. parallel zur Prüftaste geschaltet sind. Durch Kurzschließen eines dieser beiden Komponenten Prüfwiderstand und Prüftaste kann ein Fehlerstrom simuliert werden, der im Summenstromwandler eine Spannung induziert und in weiterer Folge zur Auslösung des FI-Schalters führt.

Die zweite in Fig.1 dargestellte Möglichkeit der Einwirkung des elektronischen Moduls auf den FI-Schalter liegt darin, daß dieses Modul mit einer zweiten Wicklung des Auslösers verbunden ist. Beim Empfang eines Fehlersignales vom Sensor beaufschlagt das Modul diese Wicklung mit Spannung, wodurch ebenfalls eine Auslösung erfolgt.

Gemäß Fig.2 der **FR-A1-2 643 195** erfolgt die Signalübertragung vom elektronischen Modul zum FI-Schalter über die Netzleitungen:

Die erste Variante dieser Übertragungsart sieht vor, daß das Modul an die drei Netzleitungen P, N und T angeschlossen ist. Dieses Modul weist zwei Serienschaltungen aus Widerstand und Schalter auf, welche einerends mit dem Erdleiter T und andererends mit dem Phasenleiter P bzw. dem Neutralleiter N verbunden sind. Wird vom Sensor eine Überschreitung eines vorgebbaren Wertes der von ihm beobachteten physikalischen Größe an das Modul gemeldet, schließt dieses beide Schalter und erzeugt damit Erdfehlerströme, die vom FI-Schalter detektiert werden und zu seiner Auslösung führen.

Gemäß der zweiten Variante weist das elektronische Modul einen hochfrequenten Sender auf, der mit den Netzleitungen P und N verbunden ist Liefert der Sensor an dieses Modul ein Fehlersignal, sendet der Sender eine entsprechende, kodierte Information über die Netzleitungen P, N aus.

Der FI-Schalter ist mit einem Empfänger/Dekoder ausgestattet, der diese Information empfängt und so wie das Modul gemäß Fig.1 mit dem FI-Schalter verbunden ist und dessen Auslösung bewirken kann.

Es ist eine erste Aufgabe der Erfindung, eine Einrichtung zur Analyse von in einer elektrischen Anlage fließenden Erdfehlerströmen anzugeben, bei welcher das im Fehlerfall erzeugte elektrische Signal ohne jede Verbindungsleitungen auf ein der Anlage vorgeschaltetes Schaltgerät übertragen wird.

Eine weitere Aufgabe der Erfindung ist es, ein Schaltgerät mit Unterbrechungskontakten, wie zum Beispiel FI-Schutzschalter, Leitungsschutzschalter, Schütz, Leistungsschalter bzw. mit Halbleiter-Schaltbauteilen anzugeben, welches auf ein von einer eben erläuterten Strom-Analyse-Einheit erzeugtes elektrisches Signal anspricht und eine Abschaltung der elektrischen Anlage vornimmt.

Brfindungsgemäß wird dies dadurch erreicht, daß in der Einrichtung eine erste Spule eines zur Übertragung des elektrischen Signales von der Einrichtung auf das Schaltgerät vorgesehenen Übertragers angeordnet ist.

Im dazugehörigen Schaltgerät ist erfindungsgemäß eine zweite Spule eines zur Übertragung des elektrischen Signales von einer Einrichtung auf das Schaltgerät vorgesehenen Übertragers angeordnet, wobei das Schaltgerät ein von der Einrichtung separates Gehäuse aufweist und die Einrichtung eine erste Spule des Übertragers enthält.

Die Übertragung des elektrischen Signales ist bei dieser Konstruktionsweise unabhängig von den Netzanschlußleitungen, womit sie selbst noch bei Bruch der nach der ersten Variante verwendeten Netzanschlußleitungen ungestört funktioniert.

Bei beiden erwähnten erfindungsgemäßen Ausführungsmöglichkeiten kann vorgesehen sein, daß die Stromanalysebaugruppe eine programmgesteuerte Elektronikbaugruppe umfassend beispielsweise einen Mikroprozessor, Mikrocontroller, digitalen Signalprozessor od. dgl. aufweist.

Damit sind die Charakteristik der erfindungsgemäßen Schutzschaltungsanordnung, d.h. die elektrischen Daten, wie Kurvenform, Frequenz, Amplitude des Fehlerstromes, bei welchen eine Auslösung statt finden soll, auf einfache Weise veränderbar. Darüber hinaus sind gegenüber bisher zur Stromanalyse verwendeten Summenstromwandler auch komplexe, mathematische Berechnungen erfordernde Analysen des Fehlerstromes realisierbar.

In Weiterbildung der Erfindung kann vorgesehen sein, daß die Stromanalysebaugruppe einen Schnittstellen- bzw. Bustreiber aufweist.

Dies erlaubt, daß die erfindungsgemäße Strom-Analyse-Einrichtung zur Umprogrammierung, d.h. zur Veränderung ihrer Ansprech-Charakteristik in der Anlage eingebaut bleiben kann sowie weiters keine der Programmspeicher-Bausteine ausgetauscht werden müssen bzw. während der Umprogrammierung in der Einrichtung verbleiben können.

Ein weiteres Merkmal der Erfindung kann sein, daß die Stromanalysebaugruppe eine Treiberschaltung zur Ansteuerung von Anzeigegeräten, wie z.B. PC, Hupe, Lampe od. dgl. aufweist.

Damit kann ein erkannter Fehlzustand der Anlage auf einfache Weise angezeigt werden.

Weiters kann vorgesehen sein, daß die Stromerfassungsbaugruppe durch einen in den Schutzleiter geschalteten Shunt-Widerstand gebildet ist.

Damit ist ein sehr einfacher, funktionszuverlässiger Aufbau der Stromerfassungsbaugruppe gegeben, die dennoch aber die Erdfehlerströme sehr exakt abbildet.

Alternativ dazu kann vorgesehen sein, daß die Stromerfassungsbaugruppe durch einen Kompensationsstromwandler gebildet ist.

Dabei kann im Gegensatz zur ersten Variante der Schutzleiter vollkommen unbebürdet bleiben.

Die Erfindung wird nun anhand der beigeschlossenen Zeichnungen, die bevorzugte Ausführungsbeispiele darstellen, näher erläutert. Dabei zeigt:
Fig. 1 ein Prinzip-Blockschaltbild einer Schaltungsanordnung mit erfindungsgemäßer Strom-Analyse-Einrichtung und erfindungsgemäßem Schaltgerät;
Fig.2 das Blockschaltbild nach Fig.1 mit einer einen Anlagenfehlzustand simulierenden erfindungsgemäßen Einrichtung;
Fig.3 das Blockschaltbild nach Fig.1 mit einer auf die Netzfrequenz aufmodulierte elektrische Steuersignale erzeugenden erfindungsgemäßen Einrichtung und einer ersten Ausführungsmöglichkeit der Baugruppe zum Erfassen und zur Umsetzung des elektrischen Signales in das Öffnen der Unterbrechungskontakte;
Fig.4 ein als FI-Schutzschalter ausgebildetes Schaltgerät mit einer zweiten Ausführungsmöglichkeit der Baugruppe zum Erfassen und zur Umsetzung des elektrischen Signales in das Öffnen der Unterbrechungskontakte;
Fig.5 eine erste Ausführungsmöglichkeit eines als Halbleiterschalter ausgebildeten Schaltgerätes;
Fig.5a,b die Schaltbilder des ICs LM 1893, mittels welchem die Ansteuerschaltungen 30,31 beispielsweise realisierbar sind;
Fig.6 bis 8 weitere Ausführungsmöglichkeiten von Halbleiterschalter;
Fig.6a bis 8a Schaltbilder möglicher Realisierungen der Ansteuerschaltungen 32 der Fig.6 bis 8;
Fig.9 das Blockschaltbild nach Fig. 1 bei transformatorischer Übertragung des die Auslösung des Schaltgerätes bewirkenden Signales;
Fig.10 ein Blockschaltbild von Strom-Analyse-Einrichtung und Schaltgerät gemäß der Ausführungsform nach Fig.9;
Fig. 11 eine andere Variante des Schaltgerätes nach Fig.10 und

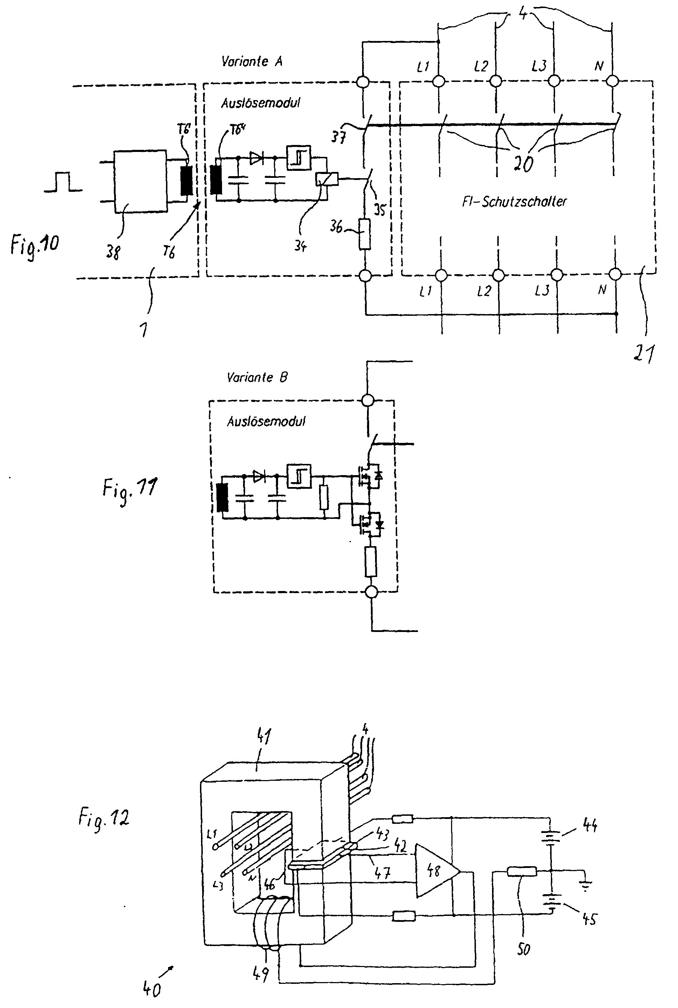

Fig. 12 ein Blockschaltbild eines als Stromerfassungsbaugruppe verwendbaren Kompensationssummenstromwandlers.

Der Erfindung liegt, wie am besten aus Fig.1 ersichtlich, der Gedanke zugrunde, ein Schaltgerät 2, das die Abtrennung der ihm nachgeschalteten elektrischen Anlage vom Netz bei Auftreten eines Erdfehlerstromes in dieser Anlage vornimmt, getrennt von einer Einrichtung 1 zur Analyse von in dieser Anlage auftretenden Erdfehlerströmen zu halten. Diese Einrichtung 1 umfaßt wie ein FI-Schutzschalter eine Fehlerstrom-Erfassungsbaugruppe 10 sowie eine dieser nachgeschaltete Stromanalysebaugruppe 11.

Einrichtung 1 und Schaltgerät 2 stehen dabei in einer solchen Verbindung miteinander, die es der Einrichtung 1 beim Erkennen eines unzulässig hohen Erdfehlerstromes erlaubt, das Öffnen der Unterbrechungskontakte 20 des Schaltgerätes 2 zu veranlassen.

Der Vorteil eines derartigen modularen Aufbaus einer Fehlerstrom-Schutzschaltungsanordnung liegt darin, daß ihr Ansprechverhalten, das durch die Einrichtung 1 bestimmt ist, durch Austausch bzw. durch Veränderung dieser Einrichtung 1 allein verändert werden kann.

Die mit strichlierter Linie 3 symbolisch angedeutete Einwirkungsmöglichkeit der Einrichtung 1 auf das Schaltgerät 2 ist durch ein von der Einrichtung 1 erzeugtes und auf das Schaltgerät 2 übertragbares elektrisches Signal gebildet, welches die Öffnung der Unterbrechungskontakte 20 des der Anlage vorgeschalteten Schaltgerätes 2 bewirkt bzw. wenn das Schaltgerät 2 durch einen Halbleiterschalter 24 gebildet ist, was weiter unten noch eingehend erläutert wird, das Sperren der Halbleiter-Schaltbauteile D1-D6 bewirkt.

Als Übertragungsmedium für das Signal werden nach einer ersten erfindungsgemäßen Ausführungsmöglichkeit die durch beide Komponenten Einrichtung 1 und Schaltgerät 2 hindurchverlaufenden Netzanschlußleitungen 4 verwendet, zu welchem Zweck die Einrichtung 1 mit einer Baugruppe 5 zur Einkopplung des elektrischen Signales in die Netzanschlußleitungen 4 ausgestattet ist.

Hinsichtlich der Art des elektrischen Signales sind dabei zwei Varianten vorgesehen:

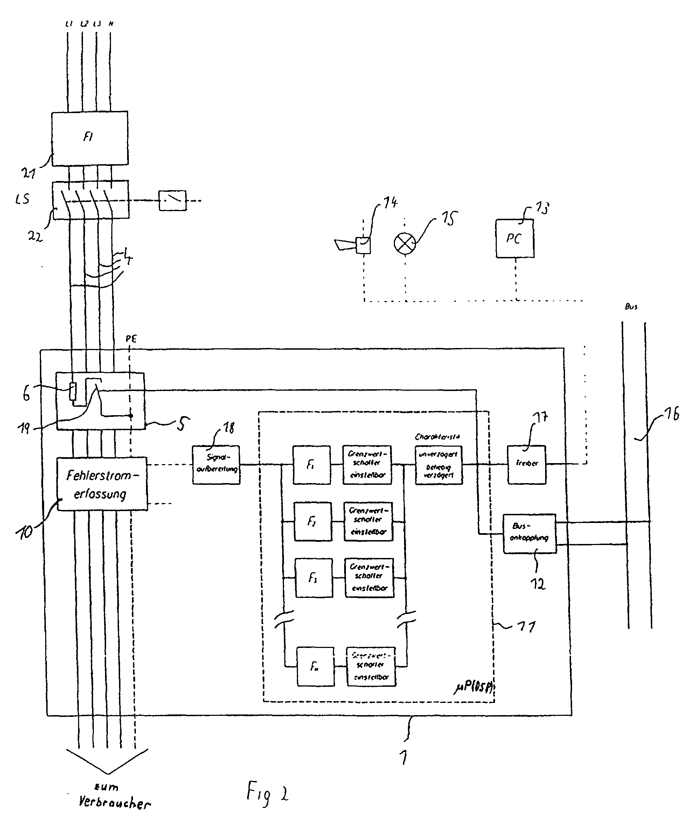

Gemäß der in Fig.2 dargestellten ersten Variante simuliert das elektrische Signal einen Erd-Fehlerstrom. Das Schaltgerät 2 muß dabei durch einen FI-Schutzschalter 21 gebildet sein, der auf diesen simulierten Anlagenfehlzustand mit einer Abtrennung der Anlage vom Netz reagiert. Die Baugruppe 5 zur Einkopplung dieses elektrischen Signales in die Netzanschlußleitungen 4 umfaßt einen entsprechend niederohmigen Widerstand 6 und einen Schalter 19, der von der Analysebaugruppe 11 betätigbar ist. Über diesen Schalter 19 wird der Widerstand 6 mit dem Phasenleiter L1 und dem Schutzleiter PE verbunden, wobei das Ergebnis selbstverständlich dasselbe bleibt, wenn der Widerstand 6 mit einem der anderen beiden Phasenleiter L2 oder L3 und dem Schutzleiter PE verbunden wird.

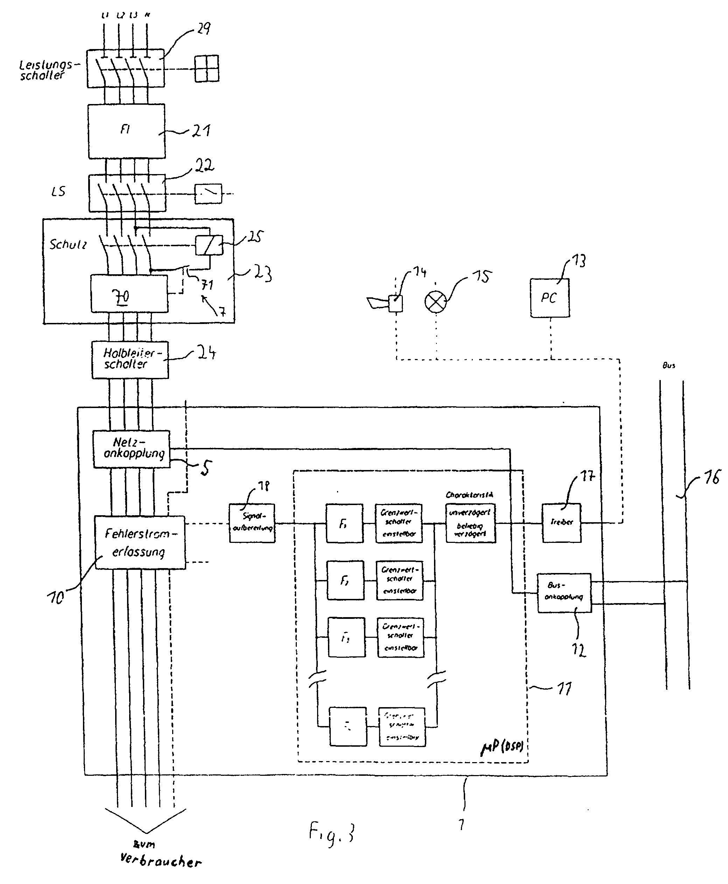

Die zweite, in Fig.3 dargestellte Variante sieht vor, daß das elektrische Signal ein relativ leistungsschwaches, eine von der Netzfrequenz verschiedene Frequenz aufweisendes Signal ist, welches von der als Modulationsschaltung ausgebildeten Baugruppe 5 der Netzspannung aufmoduliert wird.

Das vorgeschaltete Schaltgerät 2 braucht dabei kein FI-Schutzschalter sein, sondern kann auch durch Leitungsschutzschalter 22, Schütze 23, durch Halbleiterschalter 24, Leistungsschalter 29 od. dgl. gebildet sein. Das Schaltgerät 2 ist erfindungsgemäß mit einer Baugruppe 7 zum Erfassen und zur Umsetzung des der Netzspannung aufmodulierten elektrischen Signales in das Öffnen der Unterbrechungskontakte 20 ausgestattet. In Fig.3 selbst ist eine solche Baugruppe 7 bei einem als Schütz 23 ausgebildeten Schaltgerät 2 dargestellt: Sie besteht im wesentlichen aus einem Empfänger 70, der die Spule 25 des Schütz 23 über einen Schaltkontakt 71 mit Netzspannung beaufschlägt.

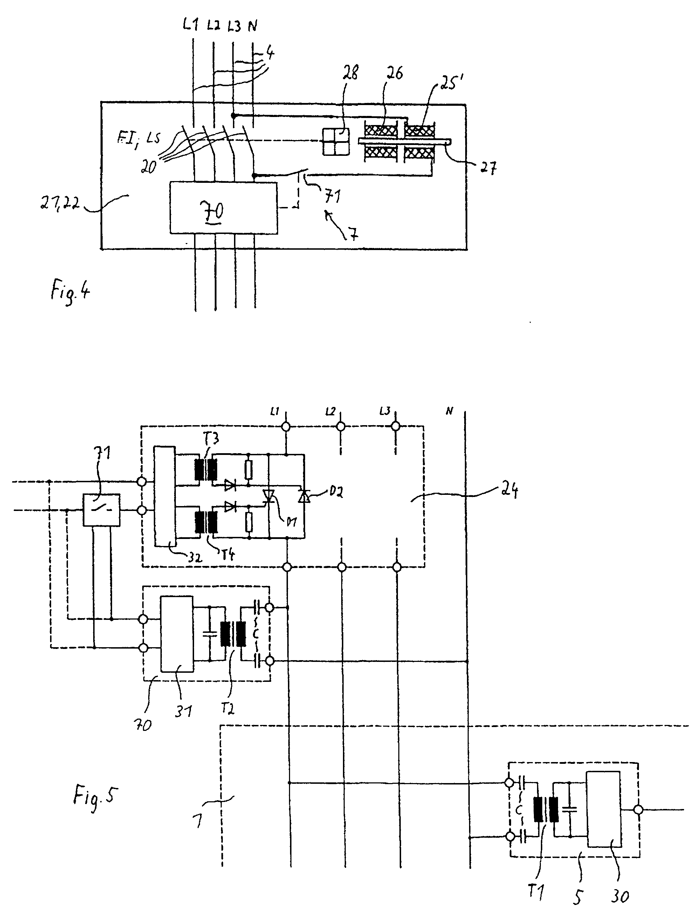

Bei anderen Typen von Schaltgeräten 2 muß die konkrete Ausführung dieser Baugruppe 7 in dem Fachmann bekannter Weise abgewandelt werden, ist hinsichtlich ihrer Funktion jedoch ident mit der in Fig.3 dargestellten Baugruppe 7. Bei einem FI-Schutzschalter 21 bzw. einem Leitungsschutzschalter 22 kann die in Fig.3 gezeigte Spule 25 durch eine Spule 25' ersetzt werden, die neben der Hauptauslöse-Spule 26 auf den Schlaganker 27 einwirkt, welcher das Schaltschloß 28 betätigt (vgl. Fig.4). Die Hauptauslöse-Spule 26 ist dabei wie üblich beim FI-Schutzschalter 21 mit der Sekundärwicklung des Summenstromwandlers bzw. beim Leistungsschutzschalter 22 in die zu überwachende Leitung geschaltet, was in Fig. 4 der Übersicht halber nicht explizit dargestellt wurde.

Bei einem Leistungsschalter 29 erfolgt das Einschalten händisch oder motorbetrieben, wobei in beiden Fällen ein Federkraftspeicher gespannt wird, der die Unterbrechungskontakte 20 in Richtung ihrer geöffneten Position vorspannt. Sobald die Unterbrechungskontakte 20 ihre geschlossene Position erreichen, wird der Federkraftspeicher verriegelt. Das Ausschalten erfolgt durch Entriegeln des Federkraftspeichers, welcher aufgrund seiner Vorspannung die Unterbrechungskontakte 20 öffnet. Besagtes Entriegeln kann händisch oder durch einen Arbeitsstromauslöser erfolgen, welcher bei der Verwendung eines Leistungsschalters 29 als erfindungsgemäßes Schaltgerät 2 in eine entsprechend -etwa gemäß Fig.3- gestaltete Baugruppe 7 eingebunden ist.

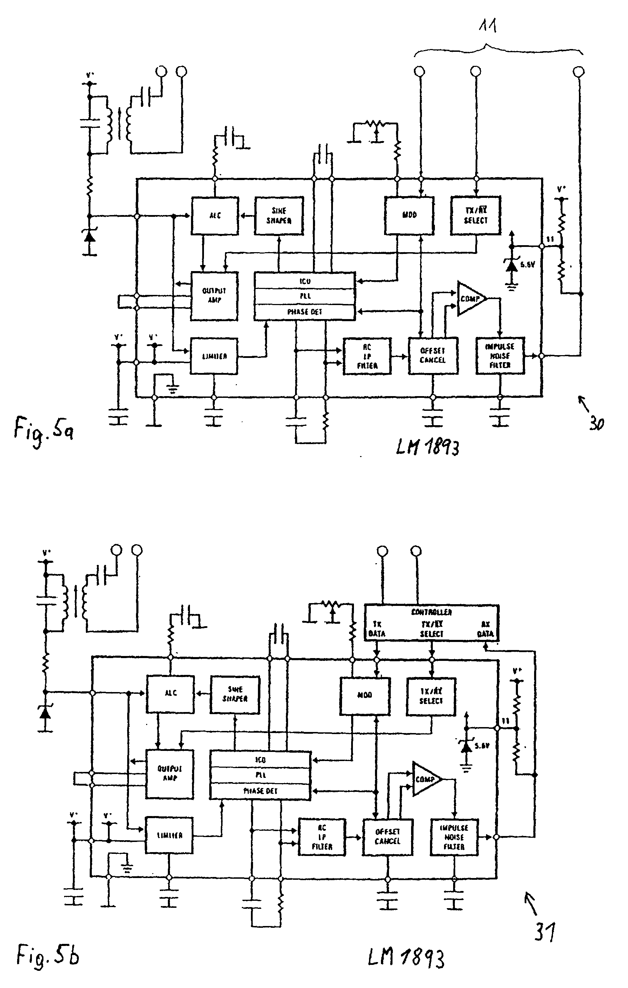

In Fig.5, die lediglich die Baugruppe 5 zur Einkopplung des elektrischen Signales in die Netzanschlußleitungen 4 sowie ein als Halbleiterschalter 24 ausgestaltetes Schaltgerät 2 zeigt, ist der Aufbau von als Modulationsschaltung ausgestalteter Baugruppe 5 und Empfänger 70 zu erkennen. Beide weisen jeweils einen Übertrager T1, T2 zur Einkopplung bzw. Auskopplung des Signales in die bzw. aus den Netzanschlußleitungen 4 auf. Zu den netzseitigen Spulen dieser Übertrager T1, T2 sind jeweils Kondensatoren C zur Abblockung der Netzspannung in Serie geschaltet. Die analyseschaltungsseitige 30 bzw. die schalterseitige Baugruppe 31 sind durch mit entsprechenden Außenbeschaltungen versehene spezielle ICs oder kundenspezifische ASICs gebildet.

Wie aus Fig.5 hervorgeht, liegt die Aufgabe der Baugruppe 30 darin, das von der Analysebaugruppe 11 kommende Signal in ein transformierbares Signal umzusetzen; die Aufgabe der Baugruppe 31 liegt darin, das transformatorisch ausgekoppelte Signal in ein zur Betätigung des Schalters 71 geeignetes Signal umzusetzen.

Entsprechend diesen Forderungen und den Eigenschaften des von der Analysebaugruppe 11 gelieferten Signales bzw. des Schalter-Ansteuersignales sind besagte Baugruppen 30, 31 in dem Fachmann bekannter Weise zu gestalten.

Als Beispiele für ICs, mit welchen die Baugruppen 30,31 realisierbar sind, können der LM 1893 (vgl. Fig.5a,b) und der LM 2893 von National Semiconductor bzw. die ähnliche Funktion aufweisenden Bausteine ST7537 und ST7536 von SGS-Thomson angegeben werden. Jeder der genannten vier ICs kann für jede der Baugruppen 30 und 31 eingesetzt werden, wobei es günstig ist, die beiden Baugruppen 30,31 mit ein und derselben IC-Type zu realisieren. Weiters ist es auch möglich, die Baugruppen 30,31 durch ASICs zu bilden, welche hinsichtlich ihrer Funktion den genannten vier ICs entsprechen.

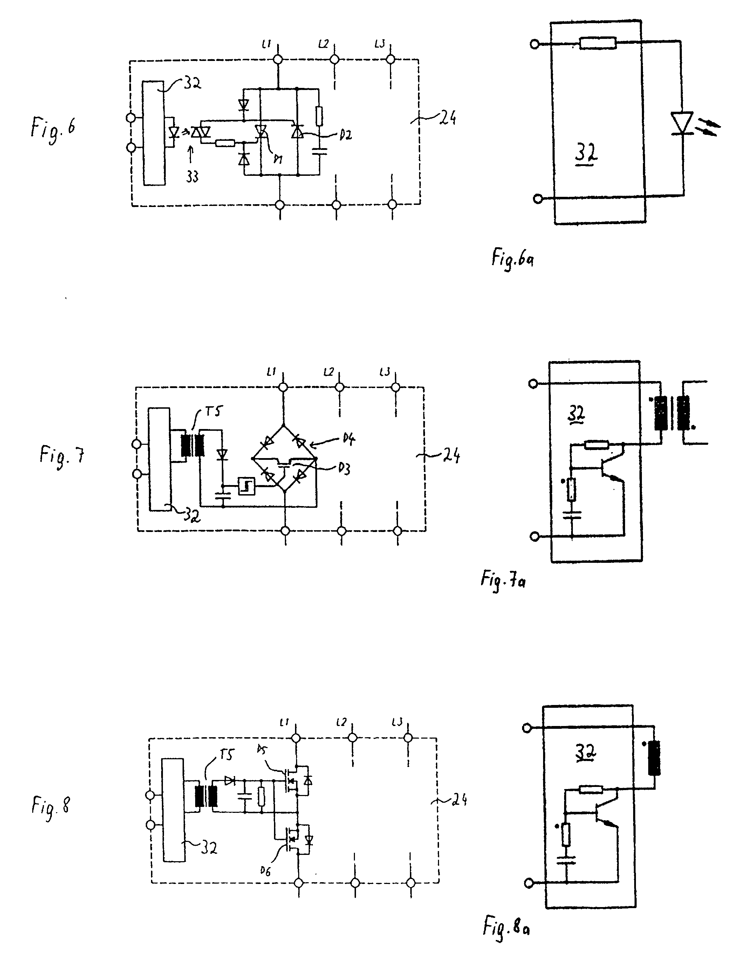

Weiters ist in Fig.5 eine erste Ausgestaltungsmöglichkeit eines Halbleiterschalters 24 zu erkennen: In jede zu schaltende Netzanschlußleitung 4 sind zwei antiparallel geschaltete Thyristoren D1,D2 geschaltet, von welchen der erste während der positiven und der zweite während der negativen Halbwelle der Netzspannung leitet. Die Ansteuerung dieser Thyristoren D1, D2 erfolgt durch eine an sich bekannte Ansteuerschaltung 32, welche die Thyristoren vermittels Übertrager T3, T4 potentialgetrennt oder vermittels eines Halbleiter-Relais 33 (vgl. Fig.6) ansteuert. Wie in Fig.6a dargestellt, kann die Ansteuerschaltung 32 in diesem Zusammenhang am einfachsten als Widerstand ausgebildet sein. Eine andere Möglichkeit liegt darin, die Ansteuerschaltung 32 als Stromquelle auszubilden.

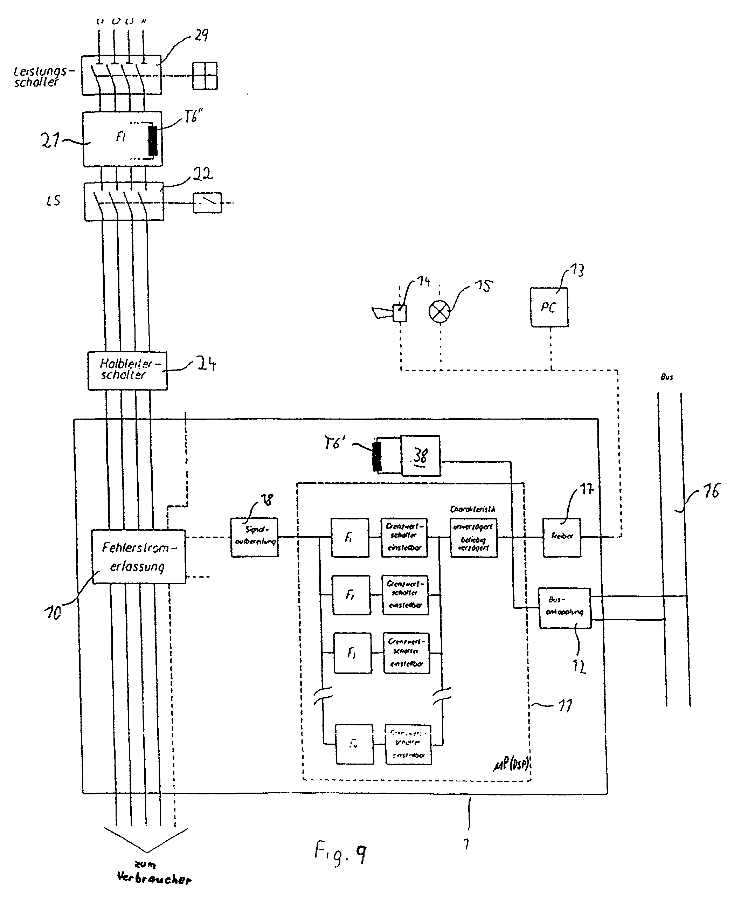

Zwei weitere Varianten von Halbleiterschalter 24 zeigen Fig.7,8. In Fig.7 ist ein IGBT D3 in die Brückendiagonale eines Brückengleichrichters D4 geschaltet, wodurch mit dem bipolaren IGBT D3 Wechselstrom geschaltet werden kann. In Fig.8 übernehmen zwei gegeneinander in Serie geschaltete MOSFETs D5, D6 die Funktion eines Wechselstromschalters. In beiden Fällen erfolgt die Ansteuerung der jeweiligen Halbleiter-Schaltbauteile D3, D5, D6 wieder durch Ansteuerschaltungen 32 vermittels Übertrager T5. Die Ansteuerschaltungen 32 können hier beispielsweise durch die in den Fig.7a,8a im Detail dargestellten Sperrschwinger gebildet sein.

Die in Fig.5 dargestellte Baugruppe 5 und der Empfänger 70 bleibt unabhängig von der Ausführungsform des Halbleiterschalters 24 unverändert, weshalb von ihrer erneuten Darstellung in den Fig.6,7,8 abgesehen wurde. Wenngleich aus Gründen der besseren Übersichtlichkeit nicht dargestellt, sind bei sämtlichen Ausführungsformen die gezeigten Halbleiter-Schaltbauteile D1-D6 und ihre Ansteuerung in jeder zu schaltenden Netzanschlußleitung 4 vorhanden.

Der Empfänger 70 wirkt in sämtlichen Ausführungsformen der Fig.5 bis 8 -wie in Fig.5 explizit dargestellt- auf die Ansteuerschaltung 32 ein und veranlaßt diese bei Detektion eines von der Baugruppe 5 der Netzspannung aufmodulierten Auslöse-Signales, die Halbleiter-Schaltbauteile D1-D6 in ihren sperrenden Zustand zu versetzen.

Diese Einwirkung kann indirekt -wie mit durchgezogenen Linien dargestellt- über den Schalter 71 erfolgen. Die Ansteuerschaltung 32 erkennt das Betätigen des Schalters 71 und reagiert darauf in der Weise, daß die Halbleiter-Schaltbauteile D1-D6 in ihren sperrenden Zustand versetzt werden. Andererseits kann der Empfänger 71 -wie mit strichlierten Linien dargestellt- auch direkt mit der Ansteuerschaltung 32 verbunden sein, wobei über diese Verbindung ein entsprechendes, die Ansteuerschaltung 32 ebenfalls zu einem Sperren der Halbleiter-Schaltbauteil D1-D6 veranlassendes Signal übertragen wird.

Alternativ zur Übertragung des elektrischen, die Öffnung der Schaltkontakte 20 bzw. das Sperren der Halbleiter-Schaltbauteile D1-D6 bewirkenden Signales von der Strom-Analyse-Einheit 1 auf das Schaltgerät 2 über die Netzanschlußleitungen 4 ist erfindungsgemäß vorgesehen, besagtes Signal transformatorisch zu übertragen.

Der Stromlaufplan einer nach diesem Prinzip ausgestalteten erfindungsgemäßen Schutzschaltungsanordnung ist in Fig.9 wiedergegeben. Er entspricht demjenigen nach Fig.3, wobei allerdings die Einkoppel-Baugruppe 5 entfällt. Zur Realisierung der transformatorischen Übertragung des elektrischen Signales ist ein Übertrager T6 vorgesehen, dessen erste Spule T6' in der Einrichtung 1 und dessen zweite Spule T6" im Schaltgerät 2 angeordnet ist. Die erste Spule T6' ist über eine Baugruppe 38 mit der Analysebaugruppe 11 verbunden, welche Baugruppe 38 ebensowie die Baugruppe 30 der Fig.5 die Aufgabe hat, das von der Analysebaugruppe 11 gelieferte Signal in ein transformierbares Signal umzuwandeln und entsprechend dieser Forderung ausgestaltet ist.

Im einfachsten Fall ist diese Baugruppe 38 durch einen Sperrschwinger gebildet, so wie er in den Fig.7a,8a dargestellt ist.

Wie in Fig.10 angedeutet, müssen die Einrichtung 1 und das Schaltgerät 2 im Schaltschrank benachbart zueinander angeordnet sein. "Benachbart" ist dabei als eine so kurze räumliche Entfernung zu verstehen, in welcher eine zur transformatorischen Übertragung ausreichende magnetische Verkoppelung der beiden Spulen T6' und T6" gegeben ist.

In den Fig.9 und 10 ist als Schaltgerät 2 beispielhaft ein FI-Schutzschalter 21 dargestellt, auf welchen das Auslösesignal transformatorisch übertragen wird. Bei dieser Variante wird das empfangene Signal selbst einer Relaisspule 34 zugeführt, deren Schaltkontakt 35 den Phasenleiter L1 vor dem FI-Schutzschalter 21 mit dem Neutralleiter N nach dem FI-Schutzschalter 21 über einen Widerstand 36 verbindet und damit einen zur Auslösung führenden Fehlerstrom erzeugt. Sollte die Energie des übertragenen Signales zur Erregung der Relaisspule 34 nicht ausreichen, kann dieser eine entsprechende Verstärkerschaltung vorgeschalten werden. Beim Öffnen der Schaltkontakte 20 wird ein in Serie zum Schaltkontakt 35 des Relais liegender Zusatzkontakt 37 geöffnet um eine Spannungsverschleppung zu vermeiden.

Der besseren Übersicht halber wurden FI-Schutzschalter 21 und das die zweite Spule T6" sowie Relaisspule 34, -kontakt 35 und Widerstand 36 beinhaltende Auslösemodul gesondert dargestellt, in der Praxis wird es aber günstig sein, dieses Auslösemodul in das Gehäuse des FI-Schutzschalters 21 zu integrieren.

In Fig.11 ist eine geringfügig andere Ausführung des Auslösemodules gemäß Fig.10 dargestellt: Relaisspule 34 und -kontakt 35 sind hier durch zwei gegeneinander in Serie geschaltete MOSFETs mit entsprechender Ansteuerschaltung ersetzt.

Anstelle der dargestellten Erzeugung eines Fehlerstromes kann die Auslösung des FI-Schutzschalters 21 auch bei transformatorischer Übertragung des Auslösesignales analog zu Fig.4 durch eine vom Auslösesignal betätigte, zusätzlich auf den Auslöseanker 27 des FI-Schutzschalters 21 einwirkende Spule erreicht werden.

Daneben ist es weiters möglich, anstatt des FI-Schutzschalters 21 jede andere Art von Schaltgerät 2, also Leitungsschutzschalter 22, Schütz 23, Halbleiterschalter 24, Leistungsschalter 29 od. dgl. zu verwenden. Die notwendigen konstruktiven Maßnahmen, die dem Auslösesignal eine zur Öffnung der Schaltkontakte 20 bzw. zum Sperren der Halbleiter-Schaltbauteile D1-D6 führende Einwirkungsmöglichkeit geben, sind dabei dieselben, wie die im Zuge der Erläuterung der ersten Ausführungsmöglichkeit der Erfindung (Übertragung des Auslösesignales über die Netzanschlußleitungen 4) dargestellten Maßnahmen.

Der Aufbau der Einrichtung 1 ist wie bereits erwähnt, ähnlich einem herkömmlichen FI-Schutzschalter und umfaßt außer der erfindungsgemäßen Baugruppe 5 zur Einkopplung des elektrischen Signales in die Netzanschlußleitungen 4 bzw. der ersten Übertragerspule T6' die Baugruppen Strom-Erfassungsbaugruppe 10 und Analysebaugruppe 11.

Die Stromerfassungsbaugruppe 10 kann im einfachsten Fall durch einen in den Schutzleiter PE geschalteten Shunt-Widerstand gebildet sein. Die an ihm abfallende Spannung liefert ein genaues Abbild des Fehlerstromes. Eine weitere Ausführungsmöglichkeit ist natürlich der bereits im FI-Schutzschalter bekannte Summenstromwandler oder ein Kompensationssummenstromwandler 40, wie er in Fig.11 dargestellt ist.

Dieser Kompensationssummenstromwandler 40 umfaßt einen Eisenkern 41 mit Luftspalt 42, durch welchen Eisenkern 41 sämtliche Netzanschlußleitungen 4 hindurchgeführt sind. In besagtem Luftspalt 42 ist ein Hall-Element 43 angeordnet, welches mit einem von den Spannungsquellen 44, 45 gelieferten Strom beaufschlagt ist. Beim Auftreten eines Erd-Fehlerstromes gibt es im Eisenkern 41 ein resultierendes Magnetfeld, das an den Elektroden 46, 47 des Hall-Elementes 43 eine seiner Stärke proportionale Spannung hervorruft. Diese Spannung wird einem Verstärker 48 zugeführt, dessen Ausgang mit einer um den Eisenkern 41 gewickelten Spule 49 verbunden ist. Durch die Spule 49 wird damit ein Strom in solcher Höhe getrieben, daß das von ihm erzeugte Magnetfeld im Eisenkern 41 die vom Fehlerstrom herrührende Magnetisierung aufhebt. Dieser Kompensationsstrom stellt daher ein Abbild des gerade vorliegenden Fehlerstromes dar, er wird über die Strommeßeinrichtung 50, die im einfachsten Fall wieder durch einen Shunt-Widerstand gebildet sein kann, der Analysebaugruppe 11 zugeführt.

Die Analysebaugruppe 11 ist erfindungsgemäß durch eine programmgesteuerte Elektronikbaugruppe umfassend beispielsweise einen Mikroprozessor, Mikrocontroller, digitalen Signalprozessor od. dgl., gebildet. Derartige programmierbare Analysebaugruppen 11 können die erfaßten Erdfehlerströme gleichzeitig hinsichtlich einer Vielzahl von verschiedenen Parametern bewerten. An auf diese Weise erkennbaren Fehlerstromtypen sind beispielsweise vorstellbar:
Fehlerwechselströme mit Netzfrequenz oder mit von der Netzfrequenz verschiedener Frequenz, die von herkömmlichen Wechselstromverbrauchern hervorgerufen werden können;
pulsierende und glatte Fehlergleichströme, die von Verbrauchern mit Gleichrichterschaltungen herrühren und
Wechsel- und pulsierende Gleichströme mit angeschnittenen Halbwellen, welche von Verbrauchern mit Phasenanschnittsteuerung verursacht werden können.

Durch entsprechende Programmierung der erfindungsgemäßen Analysebaugruppe 11 sind sowohl die Kurvenformen als auch die Höhe des Fehlerstroms, ab welchen eine Auslösung erfolgen soll, vorgebbar. Das (von Software durchgeführte) Überprüfen der Erdfehlerströme unterschiedlicher Kurvenformen ist in den Fig.2,3 symolisch durch die Parallelschaltung mehrerer Funktionsblöcke F1-Fn dargestellt, die Möglichkeit, für jeden Fehlerstromtyp separat eine Amplitude vorzugeben, ab welcher eine Auslösung erfolgen soll, wird durch die den Funktionsblöcken nachgeschalteten (ebenfalls durch Software realisierten) Grenzwertschalter dargestellt.

Da die Analyse der Erdfehlerströme durch digital arbeitende Schaltungen vorgenommen wird, ist es notwendig, das analoge Erdfehlerstromsignal, das die Fehlerstromerfassungsbaugruppe 10 liefert, zu digitalisieren. Sofern es nicht möglich ist, diese Umwandlung von der Analysebaugruppe 11 selbst durchführen zu lassen, muß eine separate Signalaufbereite-Schaltung 18 zwischen Erfassungsbaugruppe 10 und Analysebaugruppe 11 geschaltet werden. Neben bzw. anstatt der Digitalisierung kann diese Schaltung 18 auch allfällige Anpassungen des Erdfehlerstrom-Signales, wie z.B. Verstärkung, Abschwächung, Filterung od. dgl. vornehmen.

Das von den Funktionsblöcken F1-Fn und den Grenzwertschaltern generierte Auslösesignal kann unverzögert oder beliebig verzögert an die Baugruppe 5 zur Einkopplung des Signales in die Netzanschlußleitungen bzw. an die erste Übertragerspule T6' weitergegeben werden, was zeichnerisch durch den Block "Charakteristik" symbolisiert und in der Praxis wieder durch Software realisiert wird.

Eine erfindungsgemäße Einrichtung 1 nimmt damit eine weitaus differenziertere Bewertung der in der Anlage auftretenden Erdfehlerströme vor als herkömmliche FI-Schutzschalter. Eine besonders bevorzugte Anwendungsweise der erfindungsgemäßen Einrichtung zur Analyse von Anlagenströmen liegt daher darin, sie mit einem herkömmlichen FI-Schutzschalter 21 zu kombinieren und so seinen Ansprechbereich zu erweitern.

Insbesondere ist dies dann interessant, wenn der dem FI-Schutzschalter 21 nachgeschalteten Anlage Verbraucher hinzugefügt werden, welche vom FI-Schutzschalter 21 nicht erfaßbare Erdfehlerstromtypen erzeugen können. Durch entsprechende Programmierung der Analysebaugruppe 11 kann das Ansprechverhalten der erfindungsgemäßen Einrichtung 1 und damit das Auslöseverhalten des FI-Schutzschalters 21 genau auf die vom hinzugefügten Verbraucher erzeugten Erdfehlerstromformen angepaßt werden. Bei weiteren Ergänzungen der Anlage um wieder andersartige Verbraucher braucht keine bauliche Umgestaltung der Schutzeinrichtungen mehr vorgenommen werden, sondern lediglich die Programmierung der Analysebaugruppe 11 angepaßt werden.

Zur Durchführung der Programmierung der Analysebaugruppe 11 kann vorgesehen sein, den entsprechenden Programmspeicher (ROM, EPROM) aus der Einrichtung 1 auszubauen, in entsprechenden Vorrichtungen zu programmieren und danach wieder in die Einrichtung 1 einzusetzen.

Günstiger ist es jedoch, die Analysebaugruppe 11 der erfindungsgemäßen Einrichtung 1, so wie in den Zeichnungen dargestellt, mit einem Schnittstellen- bzw. Bustreiber 12 auszustatten. Dies erlaubt es, die Einrichtung 1 mit einem Programmiergerät zu verbinden, sodaß die Programmierung ohne jegliches Aus- und Einbauen von Komponenten der Analysebaugruppe 11 erfolgen kann. Die eingesetzte Schnittstellen- bzw. Bustype ist prinzipiell beliebig wählbar, vorzugsweise werden natürlich Standardtypen wie RS232, RS485, IEC-Bus od. dgl. verwendet.

Neben der Abwicklung der Programmierung der Analyseeinheit 11 kann über diese Schnittstelle bzw. über diesen Bus 16 auch das die Auslösung des Schaltgerätes 2 bewirkende elektrische Signal übertragen werden. Damit kann die Tatsache eines Fehlzustandes in der Anlage z.B. an Anzeigemittel, wie beispielsweise PC 13, Hupe 14 oder Leuchte 15 gemeldet werden.

Neben der Übertragung des Signales über das Schnittstellen- bzw. Bussystem 16 kann, so wie dies in den Zeichnungen dargestellt ist, eine vom Schnittstellen- bzw. Bussystem 16 separate Treiberschaltung 17 vorgesehen sein, welche das Auslösesignal an die die schon erwähnten Fehlzustands-Anzeigemittel PC 13, Hupe 14 oder Leuchte 15 überträgt.

## Patentansprüche

1. Einrichtung (1) zur Analyse von in einer elektrischen Anlage auftretenden Erdfehlerströmen mit einer Stromerfassungsbaugruppe (10) und einer Stromanalysebaugruppe (11), welche Einrichtung (1) bei Auftreten von Erdfehlerströmen ein elektrisches Signal erzeugt, welches die Öffnung der Unterbrechungskontakte (20) bzw. das Sperren der Halbleiter-Schaltbauteile (D1-D6) eines der Anlage vorgeschalteten Schaltgerätes (2) bewirkt, wobei die Einrichtung (1) in einem vom Schaltgerät (2) separaten Gehäuse angeordnet ist, **dadurch gekennzeichnet, daß** in der Einrichtung (1) eine erste Spule (6') eines zur Übertragung des elektrischen Signales von der Einrichtung (1) auf das Schaltgerät (2) vorgesehenen Übertragers (T6) angeordnet ist

2. Schaltgerät (2) umfassend Unterbrechungskontakte (20), wie zum Beispiel FI-Schutzschalter (21), Leitungsschutzschalter (22), Schütz (23), Leistungsschalter (29) bzw. umfassend Halbleiter-Schaltbauteile (D1-D6), **dadurch gekennzeichnet, daß** im Schaltgerät (2) eine zweite Spule (6") eines zur Übertragung des elektrischen Signales von einer Einrichtung (1) auf das Schaltgerät (2) vorgesehenen Übertragers (T6) angeordnet ist, wobei das Schaltgerät (2) ein von der Einrichtung (1) separates Gehäuse aufweist und die Einrichtung (1) eine erste Spule (6') des Übertragers (T6) enthält.

3. Einrichtung (1) nach Anspruch 1, **dadurch gekennzeichnet, daß** die Stromanalysebaugruppe (11) eine programmgesteuerte Elektronikbaugruppe umfassend beispielsweise einen Mikroprozessor, Mikrocontroller, digitalen Signalprozessor od. dgl. aufweist.

4. Einrichtung (1) nach Anspruch 3, **dadurch gekennzeichnet, daß** die Stromanalysebaugruppe (11) einen Schnittstellen- bzw. Bustreiber (12) aufweist.

5. Einrichtung (1) nach Anspruch 3 oder 4, **dadurch gekennzeichnet, daß** die Stromanalysebaugruppe (11) eine Treiberschaltung (17) zur Ansteuerung von Anzeigegeräten, wie z.B. PC (13), Hupe (14), Lampe (15) od. dgl. aufweist.

6. Einrichtung (1) nach einem der Ansprüche 1 oder 3 bis 5, **dadurch gekennzeichnet, daß** die Stromerfassungsbaugruppe (10) durch einen in den Schutzleiter (PE) geschalteten Shunt-Widerstand gebildet ist.

7. Einrichtung (1) nach einem der Ansprüche 1 oder 3 bis 5, **dadurch gekennzeichnet, daß** die Stromerfassungsbaugruppe (10) durch einen Kompensationsstromwandler (40) gebildet ist.

## Claims

1. A device (1) for analyzing earth fault currents occurring in an electric system, comprising a current detection module (10) and a current analyzing module (11), which device (1) produces an electric signal on the occurrence of earth fault currents, which signal produces the opening of the contact-breaker points (20) or the blockage of the semiconductor switching components (Dl-D6) of a switching device (2) upstream of the system, with the device (1) being arranged in a housing separate from the switching device (2), **characterized in that** in the device (1) there is arranged a first coil (6') of a transformer (T6) provided for transmitting the electric signal from the device (1) to the switching device (2).

2. A switching device (2), comprising contact-breaker points (20) such as a fault-current circuit breaker (21), a miniature circuit breaker (22), a contactor (23), power circuit breaker (29), or comprising semiconductor switching components (D1-D6), **characterized in that** in the device (1) there is arranged a second coil (6") of a transformer (T6) provided for transmitting the electric signal from the device (1) to the switching device (2), with the switching device (2) having a housing separated from the device (1) and the device (1) comprising a first coil (6') of the transformer (T6).

3. A device (1) as claimed in claim 1, **characterized in that** the current analyzing module (11) comprises for example a program-controlled electronic module comprising a microprocessor, microcontroller, digital signal processor or the like.

4. A device (1) as claimed in claim 3, **characterized in that** the current analyzing module (11) comprises an interface or bus driver (12).

5. A device (1) as claimed in claim 3 or 4, **characterized in that** the current analyzing module (11) comprises a driver circuit (17) for triggering display devices such as a PC (13), a horn (14), a lamp (15) or the like.

6. A device (1) as claimed in one of the claims 1 or 3 to 5, **characterized in that** the current detection module (10) is formed by a shunt resistor switched into the protective earth conductor (PE).

7. A device (1) as claimed in one of the claims 1 or 3 to 5, **characterized in that** the current detection module (10) is formed by a compensation current transformer (40).

## Revendications

1. Dispositif (1) destiné à analyser les courants de défaut à la terre survenant dans une installation électrique avec un groupe de détection de courant (10) et un groupe d'analyse de courant (11), ledit dispositif (1) produisant, en cas de courants de défaut à la terre, un signal électrique provoquant l'ouverture des contacts repos (20) ou le blocage des éléments de commutation semiconducteurs (D1-D6) d'un appareil de commutation (2) agencé en amont de l'installation, le dispositif (1) étant disposé dans un boîtier distinct de l'appareil de commutation (2), **caractérisé en ce qu**'une première bobine (6') d'un transformateur (T6) destiné à transmettre le signal électrique du dispositif (1) à l'appareil de commutation (2) est montée dans le dispositif (1).

2. Appareil de commutation (2) comportant des contacts repos (20), par exemple des disjoncteurs de sécurité à courant différentiel (21), des interrupteurs automatiques (22), des contacteurs (23), des interrupteurs de puissance (29) ou bien comportant des éléments de commutation semiconducteurs (D1-D6), **caractérisé en ce qu**'une deuxième bobine (6'') d'un transformateur (T6) destiné à transmettre le signal électrique d'un dispositif (1) à l'appareil de commutation (2) est montée dans l'appareil de commutation (2), l'appareil de commutation (2) comportant un boîtier distinct du dispositif (1) et le dispositif (1) contenant une première bobine (6') du transformateur (T6).

3. Dispositif (1) selon la revendication 1, **caractérisé en ce que** le groupe d'analyse de courant (11) comporte un groupe électronique commandé par programme comprenant par exemple un microprocesseur, un microcontrôleur, un processeur numérique de signaux ou similaire.

4. Dispositif (1) selon la revendication 3, **caractérisé en ce que** le groupe d'analyse de courant (11) comporte un gestionnaire d'interface ou de bus (12).

5. Dispositif (1) selon la revendication 3 ou 4, **caractérisé en ce que** le groupe d'analyse de courant (11) comporte un circuit d'attaque (17) destiné à activer les appareils indicateurs, comme par exemple le PC (13), l'avertisseur (14), la lampe (15) ou similaire.

6. Dispositif (1) selon l'une des revendications 1 ou 3 à 5, **caractérisé en ce que** le groupe de détection de courant (10) est formé par une résistance shunt agencée dans le conducteur de protection (PE).

7. Dispositif (1) selon l'une des revendications 1 ou 3 à 5, **caractérisé en ce que** le groupe de détection de courant (10) est formé par un transformateur de courant de compensation (40).
